# EUROPEAN PATENT APPLICATION

(11) **EP 2 938 033 A1**
(43) Date of publication of application: **28.10.2015**
(21) Application number: 13857723.4
(22) Date of filing: 15.11.2013
(51) Int. Cl.: H04L 12/911

(54) **DEVICE AND METHOD FOR MANAGING RESOURCES IN MULTICAST SERVICE**

(30) Priority: 29.11.2012 CN 201210499313
(71) Applicant: ZTE Corporation, Shenzhen, Guangdong 518057 (CN)
(72) Inventor: CAO, Dengyuan, Shenzhen Guangdong 518057 (CN)
(74) Representative: Tischner, Oliver
(86) International application number: PCT/CN2013/087280
(87) International publication number: WO 2014/082533

(57) **Abstract**

A device and method for managing resources in a multicast service are described. The method includes that: a system management module initializes a total amount of resources, resource sharing policies and a number of high and low priority resource pools; the high and low priority resource pools apply for a resource pool capacity thereof, and configure sharing policies among the resource pools and sharing polices of local resource pools; and the high and low priority resource pools allocate resource blocks according to the sharing policies after receiving a resource application request of multicast, and recycle the resource blocks after receiving a resource release request of multicast. By applying the device and method, the replication capacity of a system can be fully utilized while the quality of service of a multicast service is guaranteed.

## Description

### TECHNICAL FIELD

The disclosure relates to the multicast technology in the field of communications, and in particular to a device and method for managing resources in a multicast service.

### BACKGROUND

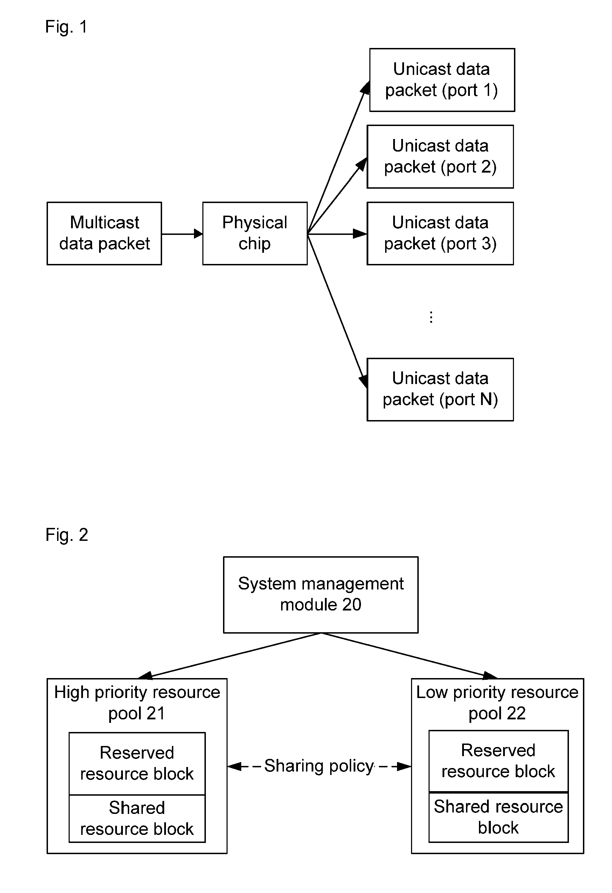

In the field of communications, multicast transmission is a forwarding method that a single data source transmits and multiple receiving sources receive, implementing the point-to-multipoint high efficient transmission, and being able to save network bandwidth and decrease network load. For any communication system, the typical multicast technology is using a physical chip to make multiple replications of an input single multicast data packet on multiple physical queues of an exit, even make multiple replications on a single physical queue to form multiple unicast data packets, so as to achieve the purpose of multipoint transmission, as shown in Fig. 1. The resource management and allocation problem is involved in the implementation of these technologies, for example, all of the physical queue, the replication capacity and the other are the key factors of influencing the system characteristic and stability. If a strong emphasis is placed on the replication capacity, the quality of service of the multicast must be negatively influenced, for example, because of the limited system resources, the system may not run normally when the replication operation is performed. Especially, for the system having requirements for the quality of service of the multicast, the system may not run normally. If a strong emphasis is placed on the quality of service, the replication capacity of the system may decrease, and all replication works cannot be finished, which causes decrease of the working capacity of the system.

### SUMMARY

In view of this, the disclosure is mainly intended to provide a device and method for managing resources in a multicast service, which can make the best of the replication capacity of a system while guaranteeing the quality of service of the multicast service.

To this end, the technical solutions of the disclosure are implemented as follows.

A device for managing resources in a multicast service is provided, which includes: a system management module, a high priority resource pool and a low priority resource pool; wherein,
the system management module is configured to initialize a total amount of resources, resource sharing policies and a number of the high and low priority resource pools;
the high and low priority resource pools are configured to apply for a resource pool capacity thereof, configure sharing policies among the resource pools and sharing polices of local resource pools, allocate resource blocks according to the sharing policies after receiving a resource application request of multicast, and recycle the resource blocks after receiving a resource release request of multicast.

Preferably, the system management module may be further configured to dynamically set the resource pools with different priorities according to a need of the multicast service in a running process of a system.

A method for managing resources in a multicast service is also provided, which includes that:
initializing, by a system management module, a total amount of resources, resource sharing policies and a number of high and low priority resource pools; applying for, by the high and low priority resource pools, a resource pool capacity thereof, and configuring sharing policies among the resource pools and sharing polices of local resource pools;
allocating, by the high and low priority resource pools, resource blocks according to the sharing policies after receiving a resource application request of multicast, and recycling the resource blocks after receiving a resource release request of multicast.

Preferably, the method may further include:
dynamically setting, by the system management module, the resource pools with different priorities according to a need of the multicast service in a running process of a system.

Preferably, the resource pool capacity may include: reserved resource blocks and shared resource blocks.

Preferably, determining the resource sharing policies based on priorities or resource thresholds; and applying all of them to local shared resources or remote shared resources.

Preferably, when the resource sharing policies are determined based on the priorities, grabbing, by a high priority multicast, the shared resource blocks of a low priority multicast.

Preferably, when the resource sharing policies are determined based on the resource thresholds, if resources that a multicast has applied for reach a set threshold value, then the multicast cannot apply for the resource blocks again.

Preferably, the allocating, by the high and low priority resource pools, the resource blocks according to the sharing policies may include:
allocating the reserved resource blocks first; if there is not a reserved resource block in the local resource pools, then allocating local shared resource blocks according to the sharing polices; if there is not a local shared resource block in the local resource pools, then allocating remote shared resource blocks of the low priority resource pools according to the sharing policies; if there is no resource in the reserved resource blocks, the local shared resource blocks and the remote shared resource blocks of the low priority resource pools, performing a multicast drop counting operation.

Preferably, the recycling, by the high and low priority resource pools, the resource blocks may include:
releasing remote shared resource blocks of the low priority resource pools first; if there is not a remote shared resource block, then releasing local shared resource blocks; if there is not a local shared resource block, then releasing local reserved resource blocks.

The disclosure provides a device and method for managing resources in a multicast service, wherein the method includes that: the system management module initializes the total amount of resources, the resource sharing policies and the number of the high and low priority resource pools; the high and low priority resource pools apply for the resource pool capacity thereof, and configure the sharing policies among the resource pools and the sharing polices of the local resource pools; and the high and low priority resource pools allocate the resource blocks according to the sharing policies after receiving the resource application request of multicast, and recycle the resource blocks after receiving the resource release request of multicast. By setting the high and low priority resource pools corresponding to the high and low priority multicasts and the resource sharing policies, the disclosure can replicate high priority multicast data packets first in the multicast service, namely the high priority multicast can occupy system resources first, and then replicate low priority multicast data packets, thereby guaranteeing the normal running of the system.

In the process of recycling the resource blocks, first releasing the remote shared resource blocks in the low priority resource pools can prevent a starvation state of a low priority multicast service from appearing, thereby avoiding influencing the quality of service of the low priority multicast; and then releasing the local shared resource blocks can prevent a starvation state of the multicast service of the local resource pools from appearing, thereby avoiding influencing the quality of service of the local priority multicast; at last, releasing the local reserved resource blocks for reuse.

It can be seen from the above that the disclosure can make the best of the replication capacity of the system while guaranteeing the quality of service of the multicast service, thereby guaranteeing the ability of the system.

### BRIEF DESCRIPTION OF THE DRAWINGS

Fig. 1 is a logic diagram of implementing multicast replication of the existing communication system;
Fig. 2 is a structure diagram of a device for managing resources in a multicast service according to the disclosure; and
Fig. 3 is a flowchart of implementing a method for managing resources in a multicast service according to the disclosure.

### DETAILED DESCRIPTION

In embodiments of the disclosure, a system management module initializes the total amount of resources, resource sharing policies and the number of high and low priority resource pools; the high and low priority resource pools apply for the resource pool capacity thereof, and configure the sharing policies among the resource pools and the sharing polices of local resource pools; and the high and low priority resource pools allocate resource blocks according to the sharing policies after receiving a resource application request of multicast, and recycle the resource blocks after receiving a resource release request of multicast.

Wherein, the resource pool capacity includes: reserved resource blocks and shared resource blocks, which are collectively called the resource blocks.

The disclosure is further elaborated below in combination with the drawings and embodiments.

Fig. 2 is a structure diagram of a device for managing resources in a multicast service according to the disclosure; as shown in Fig. 2, the device includes: a system management module 20, several high priority resource pools 21 and several low priority resource pools 22, one high priority resource pool and one low priority resource pool are only shown in Fig. 2; wherein,
the system management module 20 is configured to initialize the total amount of resources, resource sharing policies and the number of the high and low priority resource pools, so as to implement management of resources of multicast resource pools with various priorities and the sharing policies among the resource pools;
the system management module 20 can be implemented by a Central Processing Unit (CPU), a Digital Signal Processor (DSP) or a Field-Programmable Gate Array (FPGA).

Wherein, the resource sharing policies are determined based on the priorities or resource thresholds; and all of them can be applied to the local shared resources or the remote shared resources.

When the resource sharing policies are determined based on the priorities, the high priority multicast can grab the shared resource blocks of the low priority multicast; when the resource sharing policies are determined based on the resource thresholds, if the resources that a multicast has applied for reach a set threshold value, then the multicast cannot apply for the resource blocks again.

During initialization, several high priority resource pools and several low priority resource pools can be set according to the need of service. Of course, it is needed to consider the total amount of resources when the number of the high and low priority resource pools is set.

The high priority resource pool 21 is configured to apply for a resource pool capacity thereof, configure the sharing policies among the resource pools and the sharing polices of the local resource pools, allocate the resource blocks according to the sharing policies after receiving a resource application request of multicast, and recycle the resource blocks after receiving a resource release request of multicast, so as to implement the management of the high priority resource pool.

The low priority resource pool 22 is configured to apply for a resource pool capacity thereof, configure the sharing policies among the resource pools and the sharing polices of the local resource pools, allocate the resource blocks according to the sharing policies after receiving the resource application request of multicast, and recycle the resource blocks after receiving the resource release request of multicast, so as to implement the management of the low priority resource pool.

Wherein, the allocating the resource blocks according to the sharing policies includes that: reserved resource blocks are allocated first; if there is not a reserved resource block in the local resource pools, then local shared resource blocks are allocated according to the sharing polices; if there is not a local shared resource block in the local resource pools, then remote shared resource blocks of the low priority resource pools are allocated according to the sharing policies; if there is no resource in the reserved resource blocks, the local shared resource blocks and the remote shared resource blocks of the low priority resource pools, then the system does not replicate the multicast data packets, but performs the multicast drop counting operation.

Wherein, the recycling the resource blocks includes that: the remote shared resource blocks in the low priority resource pools are released first; if there is not a remote shared resource block, then the local shared resource blocks are released; if there is not a local shared resource block, then the local reserved resource blocks are released for reuse.

The system management module 20 is further configured to dynamically set the resource pools with different priorities in the running process of the system.

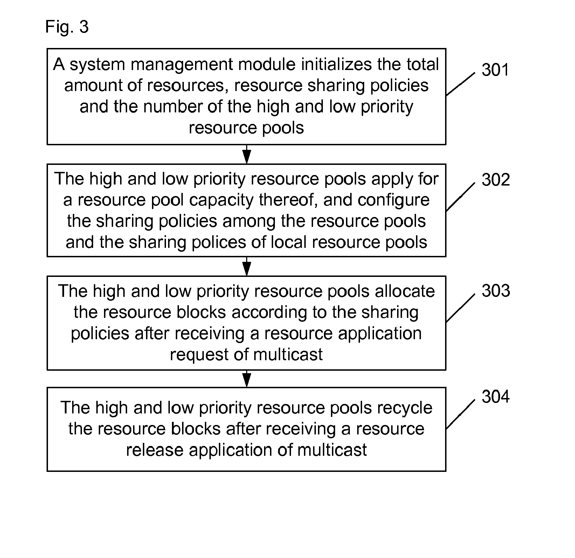

The disclosure also provides a method for managing resources in a multicast service; as shown in Fig. 3, the method includes the following implementation steps.

Step 301: A system management module initializes the total amount of resources, resource sharing policies and the number of the high and low priority resource pools;
specifically, after a system starts, the system management module initializes the total amount of resources, namely the total amount of resources of the system, wherein the total amount of resources is constant, and initializes the resource sharing policies; the resource sharing policies can be determined based on priorities or resource thresholds; and all of them can be applied to local shared resources or remote shared resources.

When the resource sharing policies are determined based on the priorities, the high priority multicast can grab the shared resource blocks of the low priority multicast; when the resource sharing policies are determined based on the resource thresholds, if the resources that a multicast has applied for reach a set threshold value, then the multicast cannot apply for the resource blocks again.

In this step, the number of the high and low priority resource pools is also initialized according to a service situation; during initialization, several high priority resource pools and several low priority resource pools can be set according to the need of service. Of course, it is needed to consider the total amount of resources when the number of the high and low priority resource pools is set.

Step 302: The high and low priority resource pools apply for a resource pool capacity thereof, and configure the sharing policies among the resource pools and the sharing polices of the local resource pools.

Specifically, the high and low priority resource pools respectively apply for the resource pool capacity thereof, wherein the resource pool capacity includes: reserved resource blocks and shared resource blocks, which are collectively called the resource blocks. Here, it is feasible to regularly apply for some resource pool capacities or not after initialization; in the running process, if there are resources not allocated, the high and low priority resource pools can also apply for the resource pool capacity again. The capacity is related to the service, for example, the multicast service is usually a fraction of a complex number, like the number of client-side users subscribing for a program.

The high and low priority resource pools configure the sharing policies between them and other resource pools and the sharing policies of the local resource pools. Here, the two sharing policies are the same and can be briefly described as: the high and low priority resource pools configure that they and the other resource pools use the system resources according to the sharing policies.

In addition, in the running process of the system, the system management module can dynamically set the resource pools with various priorities according to the need of service, namely the high and low priority resource pools.

Step 303: The high and low priority resource pools allocate the resource blocks according to the sharing policies after receiving a resource application request of multicast;
specifically, the high and low priority resource pools allocate the reserved resource blocks first after receiving the resource application request of multicast which is forwarded by the system management module; if there is not a reserved resource block in the local resource pools, then local shared resource blocks are allocated according to the sharing polices; if there is not a local shared resource block in the local resource pools, then remote shared resource blocks of the low priority resource pools are allocated according to the sharing policies; if there is no resource in the reserved resource blocks, the local shared resource blocks and the remote shared resource blocks of the low priority resource pools, then the system does not replicate the multicast data packet, but performs the multicast drop counting operation.

Here, the sharing policies are that in step 302.

Step 304: The high and low priority resource pools recycle the resource blocks after receiving a resource release application of multicast;
specifically, the high and low priority resource pools release the remote shared resource blocks in the low priority resource pools first after receiving the resource release request of multicast which is forwarded by the system management module, which can prevent a starvation state of the low priority multicast service from appearing, wherein the starvation state influences the quality of service of the low priority multicast. Here, if there is not a remote shared resource block, then the local shared resource blocks are released, so as to prevent the starvation state of the multicast service of the local resource pools from appearing, wherein the starvation state influences the quality of service of the local priority multicast. If there is not a local shared resource block, the local reserved resource blocks are released for reuse.

It can be seen from the above that by setting the high and low priority resource pools corresponding to the high and low priority multicasts and the resource sharing policies, the disclosure can replicate the high priority multicast data packets first in the multicast service, namely the high priority multicast can occupy system resources first, and then replicate the low priority multicast data packets, thereby guaranteeing the normal running of the system.

In the process of recycling the resource blocks, first releasing the remote shared resources blocks in the low priority resource pools can prevent the starvation state of the low priority multicast service from appearing, thereby avoiding influencing the quality of service of the low priority multicast; and then releasing the local shared resource blocks can prevent the starvation state of the multicast service of the local resource pools from appearing, thereby avoiding influencing the quality of service of the local priority multicast; at last, releasing the local reserved resource blocks for reuse.

The above is only the preferred embodiment of the disclosure and not intended to limit the scope of the claims of the disclosure.

## Claims

1. A device for managing resources in a multicast service, comprising: a system management module, a high priority resource pool and a low priority resource pool; wherein,
the system management module is configured to initialize a total amount of resources, resource sharing policies and a number of the high and low priority resource pools;
the high and low priority resource pools are configured to apply for a resource pool capacity thereof, configure sharing policies among the resource pools and sharing polices of local resource pools, allocate resource blocks according to the sharing policies after receiving a resource application request of multicast, and recycle the resource blocks after receiving a resource release request of multicast.

2. The device for managing resources in a multicast service according to claim 1, wherein the system management module is further configured to dynamically set the resource pools with different priorities according to a need of the multicast service in a running process of a system.

3. A method for managing resources in a multicast service, comprising:
initializing, by a system management module, a total amount of resources, resource sharing policies and a number of high and low priority resource pools; applying for, by the high and low priority resource pools, a resource pool capacity thereof, and configuring sharing policies among the resource pools and sharing polices of local resource pools;
allocating, by the high and low priority resource pools, resource blocks according to the sharing policies after receiving a resource application request of multicast, and recycling the resource blocks after receiving a resource release request of multicast.

4. The method for managing resources in a multicast service according to claim 3, further comprising:
dynamically setting, by the system management module, the resource pools with different priorities according to a need of the multicast service in a running process of a system.

5. The method for managing resources in a multicast service according to claim 3 or 4, wherein the resource pool capacity comprises: reserved resource blocks and shared resource blocks.

6. The method for managing resources in a multicast service according to claim 3 or 4, wherein determining the resource sharing policies based on priorities or resource thresholds; and applying all of them to local shared resources or remote shared resources.

7. The method for managing resources in a multicast service according to claim 6, wherein when the resource sharing policies are determined based on the priorities, grabbing, by a high priority multicast, the shared resource blocks of a low priority multicast.

8. The method for managing resources in a multicast service according to claim 6, wherein when the resource sharing policies are determined based on the resource thresholds, if resources that a multicast has applied for reach a set threshold value, then the multicast cannot apply for the resource blocks again.

9. The method for managing resources in a multicast service according to claim 5, wherein the allocating, by the high and low priority resource pools, the resource blocks according to the sharing policies comprises:
allocating the reserved resource blocks first; if there is not a reserved resource block in the local resource pools, then allocating local shared resource blocks according to the sharing polices; if there is not a local shared resource block in the local resource pools, then allocating remote shared resource blocks of the low priority resource pools according to the sharing policies; if there is no resource in the reserved resource blocks, the local shared resource blocks and the remote shared resource blocks of the low priority resource pools, performing a multicast drop counting operation.

10. The method for managing resources in a multicast service according to claim 5, wherein the recycling, by the high and low priority resource pools, the resource blocks comprises:
releasing remote shared resource blocks of the low priority resource pools first; if there is not a remote shared resource block, then releasing local shared resource blocks; if there is not a local shared resource block, then releasing local reserved resource blocks.
